# EUROPÄISCHE PATENTANMELDUNG

(11) **EP 3 142 234 A1**
(43) Veröffentlichungstag der Anmeldung: **15.03.2017**
(21) Anmeldenummer: 15185065.8
(22) Anmeldetag: 14.09.2015
(51) Int. Cl.: H02K 15/04

(54) **ANLAGE UND VERFAHREN ZUM HERSTELLEN EINES WICKLUNGSSTABS FÜR EINE STATORWICKLUNG**

(71) Anmelder: Siemens Aktiengesellschaft, 80333 München (DE)
(72) Erfinder: Engewald, Matthias, 09232 Hartmannsdorf (DE); Schuetz, Michael, 99084 Erfurt (DE); Werner, Henry, 98693 Ilmenau/Heyda (DE)

(57) **Zusammenfassung**

Die Erfindung betrifft eine Anlage zum Herstellen eines Wicklungsstabs für eine Statorwicklung eines Stators einer rotierenden elektrischen Maschine, insbesondere eines Turbogenerators, aufweisend zwei in einem variablen Abstand zueinander anordbare Bearbeitungseinheiten, wobei jede Bearbeitungseinheit Bearbeitungsmittel zum Bearbeiten eines Endabschnitts des Wicklungsstabs aufweist, wobei jedes Bearbeitungsmittel über jeweils wenigstens einen Schwenkarm um eine Schwenkachse schwenkbar an der jeweiligen Bearbeitungseinheit angeordnet ist, wobei die Schwenkachse identisch mit einer Längsmittelachse der rotierenden elektrischen Maschine ist, und wobei ein radialer Abstand jedes Bearbeitungsmittels relativ zu der Schwenkachse variierbar ist.

## Beschreibung

Die Erfindung betrifft eine Anlage und ein Verfahren zum Herstellen eines Wicklungsstabs für eine Statorwicklung eines Stators einer rotierenden elektrischen Maschine, insbesondere eines Turbogenerators.

Rotierende elektrische Maschinen werden in Kraftwerken in Form von Turbogeneratoren zum Erzeugen von elektrischer Energie eingesetzt. Hierbei wird ein Turbogenerator üblicherweise mit einer Gasturbine oder Dampfturbine angetrieben.

Ein Turbogenerator umfasst einen Stator und einen Rotor. Der Stator kann mit Statorwicklungen versehen sein, die zum Erzeugen eines Magnetfelds mit elektrischer Energie versorgbar sind. In der Regel werden diese Statorwicklungen durch Wicklungsstäbe gebildet, deren Geradteile in Längsnuten an einem Statorgrundkörper eingelegt sein können. Die Endabschnitte der Wicklungsstäbe bilden an beiden axialen Enden des Turbogenerators jeweils einen Wickelkopf aus. Im Bereich eines solchen Wickelkopfes weisen die Wicklungsstäbe eine komplexere Formgebung auf, um radial innen an dem Wickelkopf einen sich axial nach außen aufweitenden Öffnungskegel auszubilden, wobei die Wicklungsstäbe im Bereich des Wickelkopfes teilweise als Evolvente des Kegelmantels des Öffnungskegels ausgebildet sind.

Herkömmlich wird die Formgebung eines Wicklungsstabs durch Biegevorgänge hergestellt. Ein solches Biegen wird üblicherweise händisch oder maschinell durchgeführt. Für ein maschinelles Biegen ist in der Regel ein hoher und damit kostenintensiver Rüstaufwand erforderlich. Spätere Bezugspunkte der maschinell gebogenen Wicklungsstäbe sind herkömmlich an der jeweiligen Biegemaschine nicht physikalisch nachvollziehbar.

Die richtige Einstellung einer Biegemaschine wird meist durch iterative Einrichtungsschritte erreicht. Erst im Anschluss daran kann eine Vielzahl an Wicklungsstäben mit der so gefundenen Einstellung einer Biegemaschine geformt werden.

Eine Aufgabe der Erfindung ist es, den maschinellen Aufwand zur Herstellung von Wicklungsstäben zu vereinfachen.

Eine erfindungsgemäße Anlage zum Herstellen eines Wicklungsstabs für eine Statorwicklung eines Stators einer rotierenden elektrischen Maschine, insbesondere eines Turbogenerators, umfasst zwei in einem variablen Abstand zueinander anordbare Bearbeitungseinheiten, wobei jede Bearbeitungseinheit Bearbeitungsmittel zum Bearbeiten eines Endabschnitts des Wicklungsstabs aufweist. Jedes Bearbeitungsmittel ist über jeweils wenigstens einen Schwenkarm um eine Schwenkachse schwenkbar an der jeweiligen Bearbeitungseinheit angeordnet, wobei die Schwenkachse identisch mit einer Längsmittelachse der rotierenden elektrischen Maschine ist. Ein radialer Abstand jedes Bearbeitungsmittels ist relativ zu der Schwenkachse variierbar.

Erfindungsgemäß werden die Bearbeitungsmittel relativ zur Längsmittelachse der rotierenden elektrischen Maschine ausgerichtet, um einen Herstellungsvorgang durchzuführen. Hierdurch kann insbesondere der Verlauf der die Wickelköpfe bildenden Endabschnitte der Wicklungsstäbe an der erfindungsgemäßen Anlage nachgebildet werden. Unter Berücksichtigung der Längsmittelachse der rotierenden elektrischen Maschine kann die jeweilige Wickelkopfgeometrie, insbesondere der Kegelmantel des Öffnungskegels des jeweiligen Wickelkopfes, mit der erfindungsgemäßen Anlage real abgebildet werden. Zudem kann eine Lage eines Wicklungsstabs an dem jeweiligen Stator mit der erfindungsgemäßen Anlage real nachgebildet werden. Die erfindungsgemäße Anlage kann somit unter Verwendung von vorhandenen Zeichnungsdaten und ohne eine Verwendung von Probestücken eingerichtet werden. Der jeweilige geometrische Verlauf des herzustellenden Wicklungsstabs ist visuell nachvollziehbar und unter Verwendung einfacher Mittel, beispielsweise Schablonen, erkennbar. Die Anordnung der Bearbeitungsmittel an den Schwenkarmen, die schwenkbar an der Schwenkachse gelagert sind, geht mit einer einfachen und kostengünstigen, maschinenbautechnischen Umsetzung der erfindungsgemäßen Anlage einher.

Durch die Variierbarkeit des Abstandes zwischen den Bearbeitungseinheiten kann die Anlage auf einfache Art und Weise an die jeweilige Länge des Geradteils des jeweilig herzustellenden Wicklungsstabs angepasst werden. Hierzu können die Bearbeitungseinheiten an einer gemeinsamen Linearführung, beispielsweise einer Führungsschiene, bewegbar angeordnet und in einer gewünschten Position fixierbar sein. Durch die Variierbarkeit des radialen Abstands eines Bearbeitungsmittels zu der Schwenkachse kann die erfindungsgemäße Anlage an verschiedene Bohrungsdurchmesser von Statoren angepasst werden.

Die beiden Bearbeitungseinheiten der erfindungsgemäßen Anlage können gleich, insbesondere spiegelbildlich, ausgebildet sein, um beide Endabschnitte eines Wicklungsstabs auf gleiche Art und Weise bearbeiten zu können.

Ein erstes Bearbeitungsmittel ist bevorzugt eingerichtet, zunächst einen Endabschnitt des Wicklungsstabs unter einem vorgegebenen Kegelwinkel eines Öffnungskegels eines Wickelkopfes des Stators bezüglich der Schwenkachse radial nach außen abzuwinkeln und anschließend den dadurch gebildeten, abgewinkelten Abschnitt des Wicklungsstabs zur Ausbildung eines Wickelkopfabschnitts des Wickelstabs um eine quer zur Schwenkachse verlaufende Biegeachse umzuformen. Hierzu wird der radiale Abstand zwischen dem ersten Bearbeitungsmittel und der Schwenkachse eingestellt. Hierbei kann das erste Bearbeitungsmittel zusätzlich eine Verstelleinrichtung aufweisen, mit der die Anlage an verschiedene Stabbreiten anpassbar ist. Dies ist erforderlich, da die Schwenkachse identisch mit einer Längsmittelachse des Geradteils des Wicklungsstabs ist, was bei verschiedenen Stabbreiten einen Einfluss auf den einzunehmenden radialen Abstand des ersten Bearbeitungsmittels zu der Längsmittelachse bzw. Schwenkachse hat. Das erste Bearbeitungsmittel kann eingerichtet sein, den abgewinkelten Abschnitt des Wicklungsstabs zur Ausbildung des Wickelkopfabschnitts des Wickelstabs um eine winklig, beispielsweise senkrecht, zur Schwenkachse verlaufende Biegeachse umzuformen. Das erste Bearbeitungsmittel kann somit unter Berücksichtigung des jeweiligen Kegelwinkels des Öffnungskegels des Wickelkopfes des Stators, des jeweiligen Biegewinkels und der jeweiligen Stabbreite eingestellt werden.

Bevorzugt weist wenigstens eine Bearbeitungseinheit zumindest einen Hebekran auf, mit dem ein Endabschnitt des abgewinkelten Abschnitts des Wicklungsstabs während der Umformung des abgewinkelten Abschnitts des Wicklungsstabs anhebbar ist. Mit dem Hebekran kann ein Kontakt des abgewinkelten Abschnitts des Wicklungsstabs mit weiteren Bauteilen der Anlage während der Umformung bzw. Biegung des abgewinkelten Abschnitts vermieden werden. Zudem kann mit dem Hebekran der abgewinkelte Abschnitt des Wicklungsstabs zur weiteren Bearbeitung in weiteren Bearbeitungsmitteln abgelegt werden.

Wenigstens eine Bearbeitungseinheit weist bevorzugt mehrere Bearbeitungsmittel in Form von Greifern auf, in denen der abgewinkelte Abschnitt des Wicklungsstabs mit einem um die Schwenkachse gekrümmten Verlauf ablegbar und einspannbar ist, wobei jeder Greifer funktionstechnisch mit jeweils einem Aktor verbunden ist, mit dem der jeweilige Greifer an dem jeweiligen Schwenkarm radial und/oder parallel zur Schwenkachse, insbesondere parallel zum Kegelwinkel, hin und her bewegbar ist. Der abgewinkelte Abschnitt des Wicklungsstabs kann mittels des Hebekrans in den Greifern abgelegt werden. Die Greifer können zusätzlich auch gekippt werden. Nach Ablegen des abgewinkelten Abschnitts des Wicklungsstabs können die Greifer geschlossen werden. Die Greifer können derart ausgerichtet werden, dass der abgewinkelte Abschnitt des Wicklungsstabs seinen Evolventenverlauf einnimmt. Hierzu können die Greifer gleichmäßig verteilt angeordnet sein. Es kann zusätzlich an der Bearbeitungseinheit wenigstens ein Niederhalter vorhanden sein, der den Evolventenverlauf des abgewinkelten Abschnitts des Wicklungsstabs zusätzlich sichert, insbesondere während eines folgenden Bearbeitungsschritts mit einem weiteren Bearbeitungsmittel.

Bevorzugt ist ein zweites Bearbeitungsmittel eingerichtet, einen freien Endabschnitt des abgewinkelten Abschnitts des Wickelstabs um eine quer zur Schwenkachse verlaufende Biegeachse umzuformen. Das zweite Bearbeitungsmittel kann zusätzlich parallel zur Schwenkachse verlagerbar angeordnet sein. Das zweite Bearbeitungsmittel kann zusätzlich eine Verstelleinrichtung aufweisen, mit der die Anlage an verschiedene Stabbreiten anpassbar ist. Dies ist erforderlich, da die Schwenkachse identisch mit einer Längsmittelachse des Geradteils des Wicklungsstabs ist, was bei verschiedenen Stabbreiten einen Einfluss auf den einzunehmenden radialen Abstand des zweiten Bearbeitungsmittels zu der Längsmittelachse bzw. Schwenkachse hat. Das zweite Bearbeitungsmittel kann somit unter Berücksichtigung der jeweiligen Formgebung des Wickelkopfes, des jeweiligen Kegelwinkels des Öffnungskegels des Wickelkopfes des Stators, des jeweiligen Biegewinkels und der jeweiligen Stabbreite eingestellt werden.

Wenigstens eine Bearbeitungseinheit weist bevorzugt zumindest ein Bearbeitungsmittel in Form einer Trenneinheit auf, mit der ein Endabschnitt des freien Endabschnitts des abgewinkelten Abschnitts des Wickelstabs von dem abgewinkelten Abschnitt abtrennbar ist. Die Trenneinheit kann mechanisch an das zweite Bearbeitungsmittel gekoppelt oder separat davon angeordnet werden. Die Trenneinheit kann eine Schneideinrichtung und einen diese antreibenden hydraulischen oder elektromechanischen Aktor aufweisen.

Bevorzugt umfasst die Anlage wenigstens eine Anlagenelektronik, die eingerichtet ist, eine Anordnung der Bearbeitungseinheiten zueinander und eine Anordnung der einzelnen Bearbeitungsmittel relativ zu der Schwenkachse sowie eine Ansteuerung der Bearbeitungsmittel in Abhängigkeit von vorgegebenen baulichen Parametern der rotierenden elektrischen Maschine vorzunehmen. Insbesondere kann die Anlagenelektronik hierbei die Lage der Längsmittelachse der rotierenden elektrischen Maschine sowie die Lage und Formgebung des Öffnungskegels des Stators berücksichtigen. Die Anlagenelektronik ist signaltechnisch mit den Bearbeitungsmitteln verbindbar.

Ein erfindungsgemäßes Verfahren zum Herstellen eines Wicklungsstabs für eine Statorwicklung eines Stators einer rotierenden elektrischen Maschine, insbesondere eines Turbogenerators, umfasst die Schritte:
- Bereitstellen eines Wicklungsstabrohlings;
- Ermitteln von baulichen Parametern der rotierenden elektrischen Maschine bezüglich einer Längsmittelachse der rotierenden elektrischen Maschine;
- Anordnen von Bearbeitungsmitteln unter Berücksichtigung der ermittelten baulichen Parameter der rotierenden elektrischen Maschine; und
- Durchführen von zeitlich aufeinanderfolgenden Bearbeitungsschritten an dem Wicklungsstabrohling mittels der Bearbeitungsmittel.

Mit dem Verfahren sind die oben mit Bezug auf die Anlage genannten Vorteile entsprechend verbunden. Insbesondere kann die Anlage gemäß einer der vorgenannten Ausgestaltungen oder einer beliebigen Kombination derselben zur Durchführung des Verfahrens eingerichtet sein.

Bevorzugt werden als bauliche Parameter der rotierenden elektrischen Maschine zumindest eine Lage eines Öffnungskegels eines Wickelkopfes des Stators relativ zu der Längsmittelachse und ein Kegelwinkel des Öffnungskegels des Wickelkopfes ermittelt. Dies ist mit den oben mit Bezug auf die entsprechenden Ausgestaltungen der Anlage genannten Vorteilen verbunden.

Im Folgenden wird eine bevorzugte Ausführungsform einer erfindungsgemäßen Anlage anhand der beigefügten schematischen Zeichnungen erläutert. Es zeigen:
- Fig. 1: eine schematische Darstellung eines Ausführungsbeispiels für eine erfindungsgemäße Anlage;
- Fig. 2: eine schematische Darstellung einer Bearbeitungseinheit der in Fig. 1 gezeigten Anlage;
- Fig. 3: eine weitere schematische Darstellung der in Fig. 2 gezeigten Bearbeitungseinheit; und
- Fig. 4: eine schematische und perspektivische Darstellung der in den Fig. 2 und 3 gezeigten Bearbeitungseinheit.

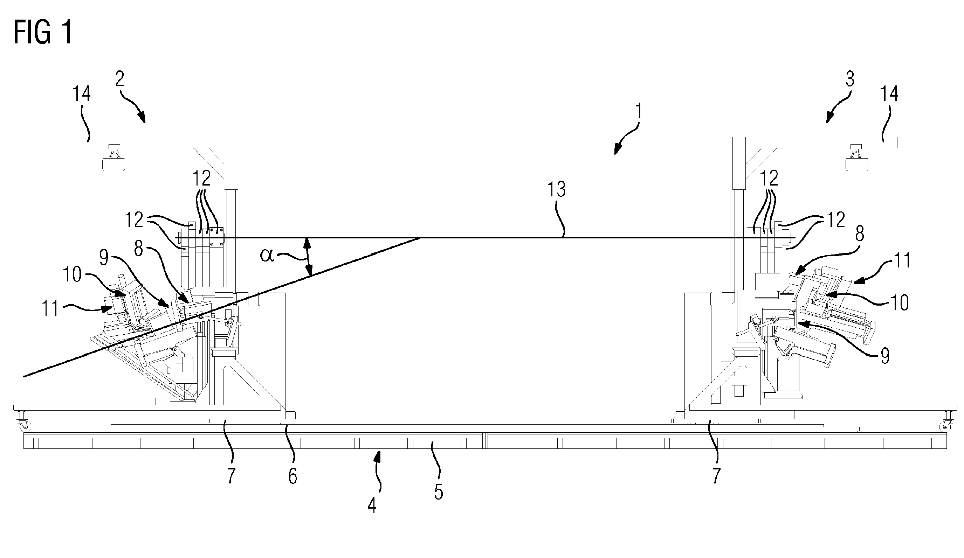

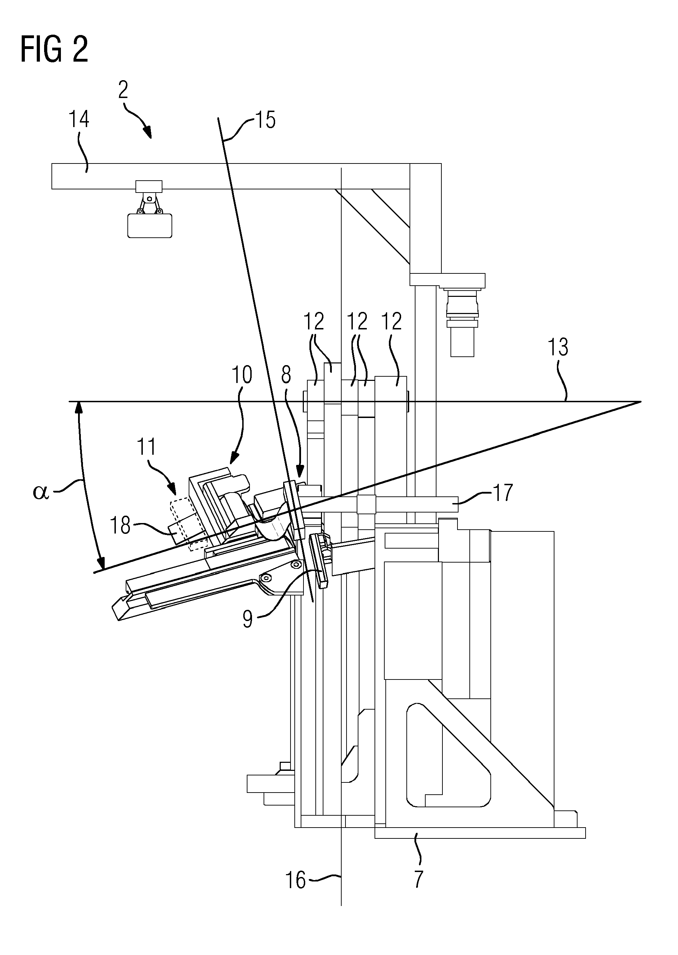

Fig. 1 zeigt eine schematische Darstellung eines Ausführungsbeispiels für eine erfindungsgemäße Anlage 1 zum Herstellen eines in den Fig. 2 bis 4 gezeigten Wicklungsstabs für eine Statorwicklung eines Stators eines Turbogenerators.

Die Anlage 1 umfasst zwei in einem variablen Abstand zueinander anordbare Bearbeitungseinheiten 2 und 3. Hierzu sind die Bearbeitungseinheiten 2 und 3 an einer Linearführung 4 bewegbar angeordnet. Die Linearführung 4 weist zwei parallel zueinander verlaufende, an einer Basiskonstruktion 5 befestigte Führungsschienen 6 auf, von denen in Fig. 1 nur eine zu sehen ist. Jede Bearbeitungseinheit 2 bzw. 3 umfasst einen Schlitten 7, über den die jeweilige Bearbeitungseinheit 2 bzw. 3 verschiebbar an der Linearführung 4 angeordnet ist. Zudem ist an jedem Schlitten 7 und/oder an der Linearführung 4 wenigstens ein nicht gezeigtes Fixiermittel vorhanden, mit dem die jeweilige Bearbeitungseinheit 2 bzw. 3 in ihrer jeweilig eingenommenen Relativstellung zu der Linearführung 4 fixierbar ist.

Jede Bearbeitungseinheit 2 bzw. 3 weist Bearbeitungsmittel 8 bis 11 zum Bearbeiten eines Endabschnitts des Wicklungsstabs auf. Jedes Bearbeitungsmittel 8, 9, 10 bzw. 11 ist über jeweils einen Schwenkarm 12 um eine Schwenkachse 13 schwenkbar an der jeweiligen Bearbeitungseinheit 2 bzw. 3 angeordnet. Die Schwenkachse 13 ist identisch mit einer Längsmittelachse der rotierenden elektrischen Maschine. Ein radialer Abstand jedes Bearbeitungsmittels 8, 9, 10 bzw. 11 ist relativ zu der Schwenkachse 13 variierbar.

Ein erstes Bearbeitungsmittel 8 ist eingerichtet, zunächst einen Endabschnitt des Wicklungsstabs unter einem vorgegebenen Kegelwinkel α eines Öffnungskegels eines Wickelkopfes des Stators bezüglich der Schwenkachse 13 radial nach außen abzuwinkeln und anschließend den dadurch gebildeten, abgewinkelten Abschnitt des Wicklungsstabs zur Ausbildung eines Wickelkopfabschnitts des Wickelstabs um eine quer zur Schwenkachse 13 verlaufende Biegeachse umzuformen.

Jede Bearbeitungseinheit 2 bzw. 3 umfasst einen Hebekran 14, mit dem ein Endabschnitt des abgewinkelten Abschnitts des Wicklungsstabs während der Umformung des abgewinkelten Abschnitts des Wicklungsstabs anhebbar ist.

Jede Bearbeitungseinheit 2 bzw. 3 umfasst mehrere Bearbeitungsmittel 9 in Form von Greifern, in denen der abgewinkelte Abschnitt des Wicklungsstabs mit einem um die Schwenkachse 13 gekrümmten Verlauf ablegbar und einspannbar ist. Jeder Greifer ist funktionstechnisch mit jeweils einem nicht gezeigten Aktor verbunden, mit dem der jeweilige Greifer an dem jeweiligen Schwenkarm 12 radial und/oder parallel zur Schwenkachse 13, insbesondere parallel zum Kegelwinkel α, hin und her bewegbar ist.

Ein zweites Bearbeitungsmittel 10 ist eingerichtet, einen freien Endabschnitt des abgewinkelten Abschnitts des Wickelstabs um eine quer zur Schwenkachse 13 verlaufende Biegeachse umzuformen.

Jede Bearbeitungseinheit 2 bzw. 3 umfasst zudem ein Bearbeitungsmittel 11 in Form einer Trenneinheit, mit der ein Endabschnitt des freien Endabschnitts des abgewinkelten Abschnitts des Wickelstabs von dem abgewinkelten Abschnitt abtrennbar ist.

Ferner umfasst die Anlage 1 eine nicht gezeigte Anlagenelektronik, die eingerichtet ist, eine Anordnung der Bearbeitungseinheiten 2 und 3 zueinander und eine Anordnung der einzelnen Bearbeitungsmittel 8 bis 11 relativ zu der Schwenkachse 13 sowie eine Ansteuerung der Bearbeitungsmittel 8 bis 11 in Abhängigkeit von vorgegebenen baulichen Parametern der rotierenden elektrischen Maschine vorzunehmen.

Fig. 2 zeigt eine schematische Darstellung der Bearbeitungseinheit 2 der in Fig. 1 gezeigten Anlage 1. In Fig. 1 ist die quer zur Schwenkachse 13 verlaufende Biegeachse 15 eingezeichnet, um die der abgewinkelte Abschnitt des Wicklungsstabs zur Ausbildung des Wickelkopfabschnitts des Wickelstabs mittels des Bearbeitungsmittels 8 umformbar ist. Zudem ist eine Referenzebene 16 eingezeichnet, in der das Geradteil des Wicklungsstabs endet. Beispielhaft sind in Fig. 2 zwei Wicklungsstäbe 17 und 18 mit unterschiedlichen Stabgeometrien eingezeichnet, die wahlweise mit der Anlage 1 herstellbar sind. Im Übrigen wird zur Vermeidung von Wiederholungen auf die obige Beschreibung zu Fig. 1 verwiesen.

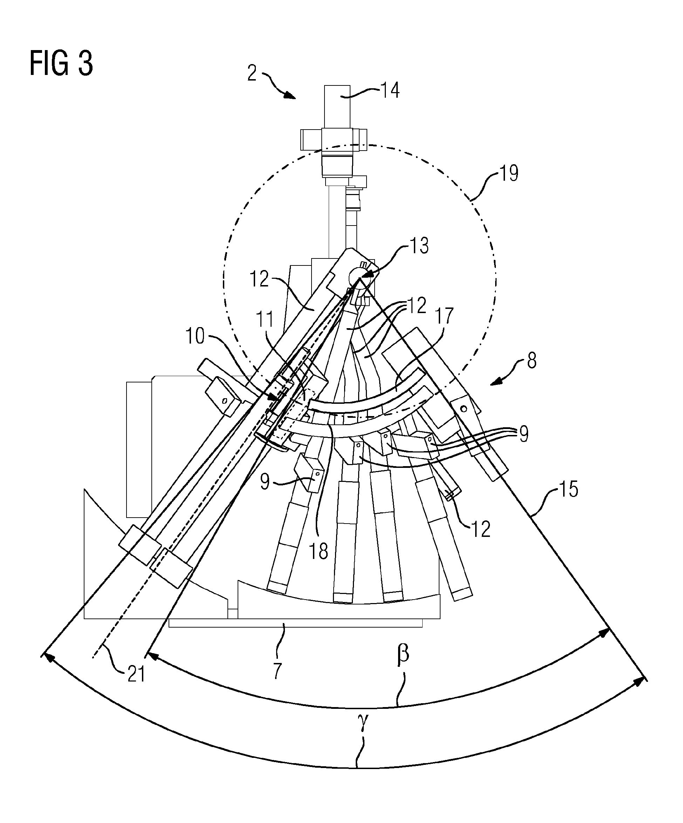

Fig. 3 zeigt eine weitere schematische Darstellung der in Fig. 2 gezeigten Bearbeitungseinheit 2. Es ist ein Evolventenkreis 19 eingezeichnet, der bei der Herstellung des Wicklungsstabs 18 berücksichtigt wird. Zudem sind ein Öffnungswinkel β für den Wickelstab 18 und ein Öffnungswinkel γ für den Wickelstab 17 eingezeichnet. Im Übrigen wird zur Vermeidung von Wiederholungen auf die obige Beschreibung zu Fig. 1 verwiesen.

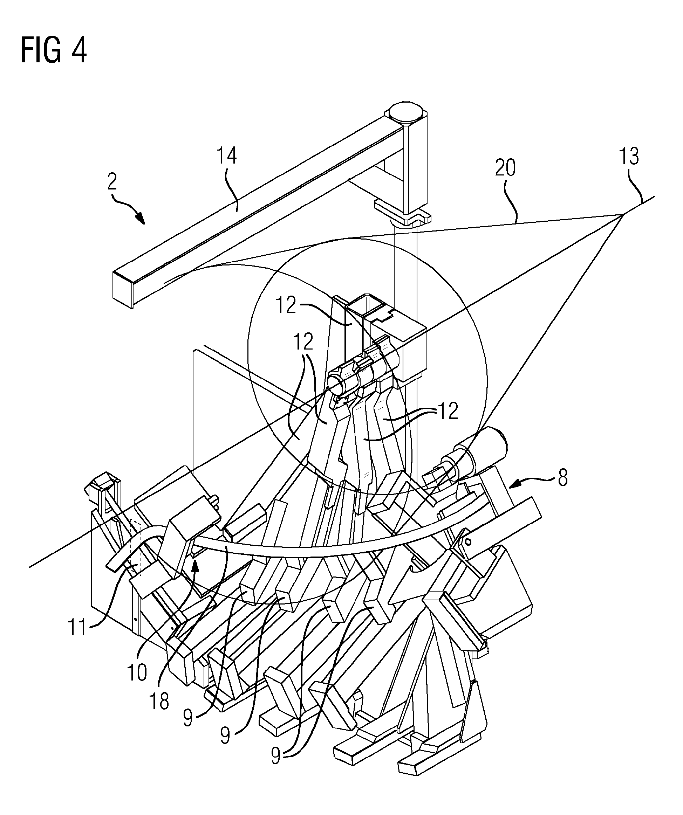

Fig. 4 zeigt eine schematische und perspektivische Darstellung der in den Fig. 2 und 3 gezeigten Bearbeitungseinheit 2. In Fig. 4 ist ein Öffnungskegel 20 eines Wickelkopfes des Stators der rotierenden elektrischen Maschine eingezeichnet, dessen Lage und Formgebung bei der Einstellung der Anlage bzw. der Bearbeitungseinheit 2 berücksichtigt wird. Im Übrigen wird zur Vermeidung von Wiederholungen auf die obige Beschreibung zu Fig. 1 verwiesen.

Ein mit der in den Fig. 1 bis 4 gezeigter Anlage 1 beispielhaft durchführbarer Herstellungsvorgang wird im Folgenden beschrieben.

Zu Beginn des Herstellungsvorgangs kann ein gerade ausgebildeter Wicklungsstabrohling an der Anlage 1 angeordnet werden. Hierbei sind die Betätigungsmittel 8, 9 und 10 geöffnet, so dass sie jeweils einen Abschnitt des Wicklungsstabs aufnehmen können. Nach dem der Wicklungsstabrohling derart an der Anlage 1 angeordnet worden ist, wird der Wicklungsstabrohling axial ausgerichtet, was mithilfe von an dem Wicklungsstabrohling angeordneten Markierungen erfolgen kann, die jeweils ein Ende eines Geradteils des herzustellenden Wicklungsstabs markieren. Anschließend kann das Geradteil in der Nähe des jeweiligen Bearbeitungsmittels 8 mittels einer nicht gezeigten Fixiereinheit der Anlage 1 fixiert werden. Das Betätigungsmittel 8 wird geschlossen, um im Weiteren die Umformung des Wicklungsstabrohlings bewirken zu können. In das Betätigungsmittel 8 können vorab nicht gezeigte Gleitelemente eingelegt werden, um später den Umformungsvorgang zu erleichtern. Ein Endabschnitt des Wicklungsstabrohlings wird über eine Kranschelle an dem Hebekran 14 befestigt. Anschließend wird der Wicklungsstabrohling mittels des ersten Bearbeitungsmittels 8 unter dem Kegelwinkel α des Öffnungskegels des Wickelkopfes des Stators abgewinkelt. Danach wird der dadurch gebildete, abgewinkelte Abschnitt des Wicklungsstabs zur Ausbildung eines Wickelkopfabschnitts des Wickelstabs mittels des ersten Bearbeitungsmittels 8 um eine quer zur Schwenkachse 13 verlaufende Biegeachse umgeformt bzw. gebogen. Gleichzeitig wird mit dem Hebekran 14 der Endabschnitt des Wickelstabrohlings nach oben gezogen und der Hebekran 14 verschwenkt, um den abgewinkelten Abschnitt des Wicklungsstabrohlings über die Betätigungsmittel 9 und 10 zu führen. Nach dem Umformen des Wicklungsstabrohlings mittels des ersten Betätigungsmittels 8 wird der abgewinkelte Abschnitt des Wicklungsstabrohlings mittels des Hebekrans 14 in den Betätigungsmitteln 9 in Form von Greifern abgelegt. Anschließend werden die Greifer geschlossen, was manuell oder automatisiert erfolgen kann. Nachdem die Greifer geschlossen worden sind, wird die Kranschelle von dem Endabschnitt des abgewinkelten Abschnitts entfernt. Durch eine Verlagerung der Greifer radial und parallel zu der Schwenkachse 13, insbesondere parallel zum Kegelwinkel α, wird an dem abgewinkelten Abschnitt der Evolventenverlauf ausgebildet. Hierzu werden die Greifer um ein geringes Ausmaß hin und her bewegt, wodurch der abgewinkelte Abschnitt gedehnt wird, so dass mechanische Spannungen in dem abgewinkelten Abschnitt beseitigt werden und der Evolventenverlauf des abgewinkelten Abschnitts optimal ausgebildet wird. Danach kann ein Teil des abgewinkelten Abschnitts mittels eines nicht gezeigten Niederhalters fixiert werden, der benachbart zu dem zweiten Bearbeitungsmittel 10 angeordnet ist. Hierdurch können die auf den übrigen Teil des abgewinkelten Abschnitts, der den Evolventenverlauf aufweist, einwirkenden, im Weiteren durch das Umformen mittels des zweiten Bearbeitungsmittels 10 erzeugten Zugkräfte reduziert werden. Daraufhin kann das zweite Betätigungsmittel 10 geschlossen werden, um im Weiteren die Umformung des Endabschnitts des abgewinkelten Abschnitts bewirken zu können. In das zweite Betätigungsmittel 10 können vorab nicht gezeigte Gleitelemente eingelegt werden, um später den Umformungsvorgang zu erleichtern. Dann wird der Endabschnitt des abgewinkelten Abschnitts mittels des zweiten Betätigungsmittels 10 umgeformt. Anschließend kann das Betätigungsmittel 11 in Form einer Trenneinheit an einem freien Endabschnitt des abgewinkelten Abschnitts angeordnet, beispielsweise auf diesen aufgesetzt, werden. Dann wird mittels der Trenneinheit ein Trennvorgang durchgeführt und hierdurch mit der Trenneinheit ein freier Endabschnitt des abgewinkelten Abschnitts des Wickelstabs von dem abgewinkelten Abschnitt abgetrennt. Das abgetrennte Teil kann in einem darunter angeordneten Kasten ausgefangen werden. Anschließend kann die Trenneinheit wieder entfernt werden. Danach können die Bearbeitungsmittel 8, 9 und 10 geöffnet und dann der fertiggestellte Wicklungsstab der Anlage 1 entnommen werden. Die Greifer können hierzu vorab abgesenkt werden.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Anlage (1) zum Herstellen eines Wicklungsstabs (17, 18) für eine Statorwicklung eines Stators einer rotierenden elektrischen Maschine, insbesondere eines Turbogenerators, aufweisend zwei in einem variablen Abstand zueinander anordbare Bearbeitungseinheiten (2, 3),
wobei jede Bearbeitungseinheit (2, 3) Bearbeitungsmittel (8, 9, 10, 11) zum Bearbeiten eines Endabschnitts des Wicklungsstabs (17, 18) aufweist,
wobei jedes Bearbeitungsmittel (8, 9, 10, 11) über jeweils wenigstens einen Schwenkarm (12) um eine Schwenkachse (13) schwenkbar an der jeweiligen Bearbeitungseinheit (2, 3) angeordnet ist,
wobei die Schwenkachse (13) identisch mit einer Längsmittelachse der rotierenden elektrischen Maschine ist, und wobei ein radialer Abstand jedes Bearbeitungsmittels (8, 9, 10, 11) relativ zu der Schwenkachse (13) variierbar ist.

2. Anlage (1) gemäß Anspruch 1,
wobei ein erstes Bearbeitungsmittel (8) eingerichtet ist, zunächst einen Endabschnitt des Wicklungsstabs (17, 18) unter einem vorgegebenen Kegelwinkel (α) eines Öffnungskegels (20) eines Wickelkopfes des Stators bezüglich der Schwenkachse (13) radial nach außen abzuwinkeln und anschließend den dadurch gebildeten, abgewinkelten Abschnitt des Wicklungsstabs (17, 18) zur Ausbildung eines Wickelkopfabschnitts des Wickelstabs (17, 18) um eine quer zur Schwenkachse (13) verlaufende Biegeachse (15) umzuformen.

3. Anlage (1) gemäß Anspruch 2,
wobei wenigstens eine Bearbeitungseinheit (2, 3) zumindest einen Hebekran (14) aufweist, mit dem ein Endabschnitt des abgewinkelten Abschnitts des Wicklungsstabs (17, 18) während der Umformung des abgewinkelten Abschnitts des Wicklungsstabs (17, 18) anhebbar ist.

4. Anlage (1) gemäß Anspruch 2 oder 3,
wobei wenigstens eine Bearbeitungseinheit (2, 3) mehrere Bearbeitungsmittel (9) in Form von Greifern aufweist, in denen der abgewinkelte Abschnitt des Wicklungsstabs (17, 18) mit einem um die Schwenkachse (13) gekrümmten Verlauf ablegbar und einspannbar ist, und wobei jeder Greifer funktionstechnisch mit jeweils einem Aktor verbunden ist, mit dem der jeweilige Greifer an dem jeweiligen Schwenkarm (12) radial und/oder parallel zur Schwenkachse (13), insbesondere parallel zum Kegelwinkel (α), hin und her bewegbar ist.

5. Anlage (1) gemäß einem der Ansprüche 2 bis 4,
wobei ein zweites Bearbeitungsmittel (10) eingerichtet ist, einen freien Endabschnitt des abgewinkelten Abschnitts des Wickelstabs (17, 18) um eine quer zur Schwenkachse (13) verlaufende Biegeachse (21) umzuformen.

6. Anlage (1) gemäß einem der Ansprüche 2 bis 5,
wobei wenigstens eine Bearbeitungseinheit (2, 3) zumindest ein Bearbeitungsmittel (11) in Form einer Trenneinheit aufweist, mit der ein Endabschnitt des freien Endabschnitts des abgewinkelten Abschnitts des Wickelstabs (17, 18) von dem abgewinkelten Abschnitt abtrennbar ist.

7. Anlage (1) gemäß einem der Ansprüche 1 bis 6, aufweisend wenigstens eine Anlagenelektronik, die eingerichtet ist, eine Anordnung der Bearbeitungseinheiten (2, 3) zueinander und eine Anordnung der einzelnen Bearbeitungsmittel (8, 9, 10, 11) relativ zu der Schwenkachse (13) sowie eine Ansteuerung der Bearbeitungsmittel (8, 9, 10, 11) in Abhängigkeit von vorgegebenen baulichen Parametern der rotierenden elektrischen Maschine vorzunehmen.

8. Verfahren zum Herstellen eines Wicklungsstabs (17, 18) für eine Statorwicklung eines Stators einer rotierenden elektrischen Maschine, insbesondere eines Turbogenerators, aufweisend die Schritte:
- Bereitstellen eines Wicklungsstabrohlings;
- Ermitteln von baulichen Parametern der rotierenden elektrischen Maschine bezogen auf eine Längsmittelachse der rotierenden elektrischen Maschine;
- Anordnen von Bearbeitungsmitteln (8, 9, 10, 11) unter Berücksichtigung der ermittelten baulichen Parameter der rotierenden elektrischen Maschine; und
- Durchführen von zeitlich aufeinander folgenden Bearbeitungsschritten an dem Wicklungsstabrohling mittels der Bearbeitungsmittel (8, 9, 10, 11).

9. Verfahren gemäß Anspruch 8,
wobei als bauliche Parameter der rotierenden elektrischen Maschine zumindest eine Lage eines Öffnungskegels (20) eines Wickelkopfes des Stators relativ zu der Längsmittelachse und ein Kegelwinkel (α) des Öffnungskegels (20) des Wickelkopfes ermittelt werden.
